Europäisches Patentamt

(19) European Patent Office

Office européen des brevets

(11) Veröffentlichungsnummer: **0 389 556 B1**

(12) # EUROPÄISCHE PATENTSCHRIFT

(45) Veröffentlichungstag der Patentschrift:
06.11.91 Patentblatt 91/45

(51) Int. Cl.$^5$: **B60T 17/22**

(21) Anmeldenummer: **89900804.9**

(22) Anmeldetag: **28.10.88**

(86) Internationale Anmeldenummer:
**PCT/EP88/00974**

(87) Internationale Veröffentlichungsnummer:
**WO 89/04784 01.06.89 Gazette 89/12**

(54) **DURCH ELEKTRISCHE SIGNALE BETÄTIGBARE REGELANLAGE.**

(30) Priorität: **25.11.87 DE 3739878**

(43) Veröffentlichungstag der Anmeldung:
**03.10.90 Patentblatt 90/40**

(45) Bekanntmachung des Hinweises auf die
Patenterteilung:
**06.11.91 Patentblatt 91/45**

(84) Benannte Vertragsstaaten:
**DE FR GB IT SE**

(56) Entgegenhaltungen:
**GB-A- 1 481 621**
**GB-A- 1 481 622**
**GB-A- 2 020 121**
**US-A- 3 944 969**
**US-A- 4 107 646**

(73) Patentinhaber: **ROBERT BOSCH GmbH**
**Postfach 10 60 50**
**W-7000 Stuttgart 10 (DE)**

(72) Erfinder: **BRÄUNINGER, Jürgen**
**Kaiserslauterer Strasse 60**
**W-7000 Stuttgart 31 (DE)**
Erfinder: **SCHLICHENMAIER, Andreas**
**Zuberfeldstrasse 74**
**W-7129 Zuberfeld 2 (DE)**
Erfinder: **SCHWABE, Ulrich**
**Ditzenbrunnerstrasse 60**
**W-7257 Ditzingen (DE)**

(74) Vertreter: **Kammer, Arno, Dipl.-Ing.**
**ROBERT BOSCH GmbH Zentralstelle**
**Patente-Elektronik Postfach 10 60 50**
**W-7000 Stuttgart 1 (DE)**

## Beschreibung

### Stand der Technik

Die Erfindung geht aus von einer durch elektrische Signale betätigbaren Regelanlage z. B. Fahrzeugbremsanlage mit den Merkmalen des Oberbegriffs des Anspruchs 1.

Um die Steuergeräte und gegebenenfalls die angeschlossenen Bremsdrucksteuereinrichtungen auf Fehler überprüfen zu können, hat man bisher jedem Steuergerät einen Aufforderungssignalgeber und ein Anzeigegerät zugeordnet und die Aufforderungssignalgeber nacheinander betätigt.

### Vorteile der Erfindung

Dem gegenüber wird durch die Erfindung erreicht, daß mit einem geringen Zusatzaufwand in den Steuergeräten diese durch ein Aufforderungssignal überprüfbar sind, wobei nur ein Anzeigegerät und ein Aufforderungssignalgeber benötigt wird. Auch ist es bei dieser Lösung nicht notwendig, unterschiedliche Steuergeräte zu verwenden bzw. unterschiedliche Software dafür vorzusehen, um die Steuergeräte irgendwie anzupassen. Vielmehr können völlig identische Steuergeräte zum Einsatz kommen. Zusätzlich ist in den Steuergeräten lediglich ein zusätzlicher Ausgang und eine Verbindung zwischen diesem und dem Aufforderungssignal-Eingang des nächsten Steuergerätes notwendig.

### Figurenbeschreibung

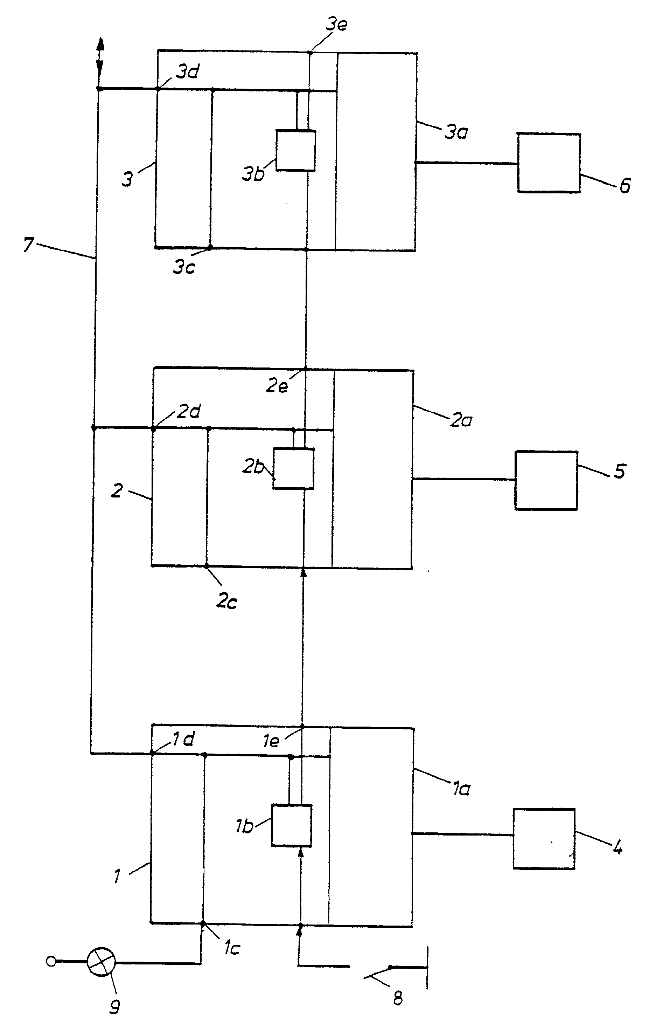

Die Zeichnung zeigt ein Ausführungsbeispiel mit drei Steuergeräten 1, 2 und 3 die den Bremsen von drei Achsen zugeordnet sein sollen. Diese enthalten die Bremsregler 1a, 2a und 3a in den unteren Teilen der Blöcke 1, 2 und 3. Hierin kann auch ein ABS oder ein ASR enthalten sein. Diese Regler steuern über Bremsdrucksteuereinrichtungen 4 - 6 Bremsdrücke an den Bremsen ein. Die Vorgabe des Sollbremsdrucks wird durch ein Steuersignal auf einer bidirektionalen Ansteuerleitung 7, bewirkt.

Die Steuergeräte 1, 2 und 3 enthalten Prüfblöcke 1b, 2b und 3b. Diese speichern ab, ob ein Fehler vorliegt oder nicht und zum anderen in welchem Bereich sich der Fehler befindet. Bei Aktivierung gibt ein Prüfblock diese gespeicherte Information wie im folgenden beschrieben aus.

Die Aktivierung des ersten Prüfblock 1b wird durch Schließen eines außenhalb befindlichen vom Fahrer betätigbaren Schalters 8 vorgenommen. Er gibt die Fehler-Information in Form eines Blinkcodes auf den Ausgang 1c und eine dort angeschlossene Blinklampe 9. Aus der Folge des Aufleuchtens der Blinklampe 9 kann der Fahrer erkennen, ob das Steuergerät 1 voll funktionsfähig ist bzw. welche Fehler vorliegen. Daß die Signalfolge über den Anschluß 1d auch zur Ansteuerleitung 7 gelangt ist nicht störend, läßt vielmehr die anderen Steuergeräte erkennen, daß eine Überprüfung läuft. Wenn der Prüfblock 1b seine Blinkcode ausgegeben hat, koppelt er ein Signal auf einen Ausgang 1e. Dieses Signal dient als Aufforderungssignal für den Prüfblock 2b des folgenden Steuergeräts. Bei der nun erfolgenden Aktivierung im Steuergerät 2 wird wieder ein Blinkcode ausgegeben, der über den Anschluß 2d zur Ansteuerleitung 7 und weiter über einen Eingang 1d zum Ausgang 1c des Steuergerätes 1 und damit zur Blinklampe 9 gekoppelt wird, Der Ausgang 2c des Steuergerätes ist hier nicht beschaltet. Die Prüfung im Steuergerät 3 geschieht in gleicher Weise.

Anstelle der Prüfblöcke 1b, 2b und 3b können natürlich auch anders geartete Prüfblöcke vorgesehen sein, die einen Fehler erkennen können und jedem Fehler eine bestimmte Signalfolge zuordnen, wobei auch dem Nichtvorhandensein eines Fehlers eine bestimmte Signalfolge zugeordent wird.

### Patentansprüche

1. Durch elektrische Signale betätigbare Regelanlage enthaltend mehrere Steuergeräte (1,2,3), mit Steuereingängen (1d,2d,3d), denen über eine diese Steuereingänge miteinander verbindende Ansteuerleitung (7) ein Sollwert in Form eines elektrischen Signals übermittelt wird, die ihnen zugeordnete Stellglieder (1a,2a,3a) entsprechend dem Sollwert einstellen und die derart ausgelegt sind, daß sie in ihnen und den angeschalteten Stellgliedern (1a,2a,3a) auftretende Fehler erkennen und daß sie auf ein über einen weiteren Eingang gegebenes Aufforderungssignal hin durch ein entsprechend kodiertes Anzeigesignal das Nichtvorhandensein oder Vorhandensein eines Fehlers und gegebenenfalls die Fehlerart auf einem getrennten Anzeigegerät (9) anzeigen, dadurch gekennzeichnet, daß die Steuergeräte(1,2,3) jeweils einen ersten Ausgang (1c,2c,3c) aufweisen, an den das Anzeigegerät (9) anschließbar ist, daß lediglich einem der Steuergeräte (1,2,3) das Aufforderungssignal über den weiteren Eingang direkt zugeführt wird, und nur dieses eine Steuergerät über den ersten Ausgang (1c) mit dem Anzeigegerät (9) verbunden ist, daß die Steuergeräte (1,2,3) jeweils einen weiteren Ausgang (1e,2e,3e) aufweisen, der mit dem weiteren Eingang eines nachfolgenden Steuergerätes (2,3) verbunden ist und daß die Steuergeräte(1,2,3) derart ausgelegt sind, daß sie nach Vorliegen eines Aufforderungssignals ihr kodiertes Anzeigesignal auf die Ansteuerleitung (7) koppeln und nach Ausgabe ihres kodierten Anzeigesignals ein simuliertes Aufforderungssignal über den, weiteren Ausgang (1e,2e,3e) abgeben und daß, die Steuereingänge (1d,2d,3d) der Steuergeräte (1,2,3) jeweils mit den ersten Ausgangen (1c,2c,3c) verkoppelt sind.

2. Regelanlage nach Anspruch 1, gekennzeichnet durch ihre Anwendung bei einer Fahrzeugbremsanlage für ein mehrachsiges Fahrzeug, wobei jeder Achse und/oder jeweils einer Gruppe von Achsen ein Steuergerät zugeordnet ist.

**Revendications**

1. Système de régulation mis en oeuvre par des signaux électriques comportant plusieurs dispositifs de commande (1, 2, 3) avec des entrées de commande (1d, 2d, 3d) qui reçoivent, par une ligne de commande (7) reliant ces entrées de commande, une valeur de consigne sous la forme d'un signal électrique qui règlent de façon correspondante à la valeur de consigne les organes de réglage (1a, 2a, 3a) qui leur sont associés et qui sont conçus pour détecter les défauts qui se produisent dans ces organes et dans les organes reliés (1a, 2a, 3a) et en ce qu'ils indiquent par un signal de demande fourni à une autre entrée, au moyen d'un signal d'affichage codé de manière appropriée, la présence ou l'absence d'un défaut et le cas échéant le type de défaut sur un dispositif d'affichage (9) distinct, système caractérisé en ce que les dispositifs de commande (1, 2, 3) ont chaque fois une première sortie (1c, 2c, 3c) à laquelle est relié le dispositif d'affichage (9) et en ce qu'uniquement l'un des dispositifs de commande (1, 2, 3) reçoit le signal de demande, directement par l'autre entrée et en ce que seulement cet unique dispositif de commande est relié par la première sortie (1c) au dispositif d'affichage (9), les dispositifs de commande (1, 2, 3) ayant chaque fois une autre sortie (1e, 2e, 3e) qui est reliée à l'autre entrée d'un dispositif de commande (2, 3) suivant et en ce que les dispositifs de commande (1, 2, 3) sont conçus pour qu'en présence d'un signal de demande ils appliquent leur signal d'affichage codé à la ligne de commande (7) et après l'émission de leur signal d'affichage codé ils fournissent un signal de demande simulé par l'autre sortie (1e, 2e, 3e) et en ce que les entrées de commande (1d, 2d, 3d) des dispositifs de commande (1, 2, 3) sont chaque fois couplées aux premières sorties (1c, 2c, 3c).

2. Système de régulation selon la revendication 1, caractérisé par son application à l'installation de freinage d'un véhicule à plusieurs essieux, un dispositif de commande étant associé à chaque essieu et/ou chaque fois un groupe d'essieux.

**Claims**

1. Regulation system which can be operated by electrical signals, containing a plurality of control units (1,2,3) having control inputs (1d,2d,3d), to which a nominal value in the form of an electrical signal is transmitted, via a trigger line (7) which connects these control inputs to one another, which control inputs set control elements (1a,2a,3a), associated with them, according to the nominal value and are designed such that they identify faults occurring in themselves and in the connected control elements (1a,2a,3a) and such that, in response to a request signal given through a further input, they indicate the absence or presence of a fault and, if desired, the type of fault, on a separate indicator unit (9), by means of an appropriately coded indication signal, characterised in that the control units (1,2,3) in each case have a first output (1c,2c,3c), to which the indicator unit (9) can be connected, in that the request signal is supplied directly via the further input to only one of the control units (1,2,3), and only this one control unit is connected via the first output (1c) to the indicator unit (9), in that the control units (1,2,3) in each case have a further output (1e,2e,3e), which is connected to the further input of a subsequent control unit (2,3) and in that the control units (1,2,3) are designed such that, after application of a request signal, they couple their coded indication signal to the trigger line (7) and, after output of their coded indication signal, a simulated request signal is emitted via the further output (1e,2e,3e), and in that the control inputs (1d,2d,3d) of the control units (1,2,3) are in each case coupled to the first outputs (1c,2c,3c).

2. Regulation system according to Claim 1, characterised by its application in the case of a vehicle braking system for a multi-axle vehicle, a control unit being allocated to each axle and/or in each case a group of axles.

EP 0 389 556 B1

4